# EUROPEAN PATENT APPLICATION

(11) **EP 4 786 918 A1**
(43) Date of publication of application: **05.08.2026**
(21) Application number: 26155070.1
(22) Date of filing: 29.01.2026
(51) Int. Cl.: G01B 11/24, G01B 11/245

(54) **DEVICE FOR READING THE PROFILE OF A KEY**

(30) Priority: 30.01.2025 IT 202500001716
(71) Applicant: Keyline S.p.A., 31015 Conegliano (TV) (IT)
(72) Inventor: Biagi, Massimo, I-31015 Conegliano (TV) (IT); Baratto, Luca, I-31010 Pianzano (TV) (IT); Slaviero, Fabio, I-32016 Alpago (BL) (IT); Pecoraro, Daniele, I-31020 Sernaglia della Battaglia (TV) (IT); Alpago, Giacomo, I-31012 Cappella Maggiore (TV) (IT)
(74) Representative: De Bortoli, Tiziano

(57) **Abstract**

The present invention relates to a device (1, 1', 1") for reading the profile of a blade (5B) of a key (5). This device comprises a chamber (10) in which said blade (5B) can be positioned through an inlet section (9). The device (1, 1', 1") comprises a support assembly (30) including at least one support element (31) that supports a flat surface (300) for supporting a portion of the key (5), where this flat surface (300) defines a reference plane (100). The device (1, 1', 1") further comprises a lighting assembly (20) operatively associated with the chamber (10) to illuminate the blade (5B) and an optical assembly (40) configured to provide at least one image (IP) of the profile of the blade (5) and at least one image (IC) of the blade (5B) captured on the reference plane (100). According to the invention, the support element (31) is rotatable about an axis of rotation (501) orthogonal to said reference plane (100) and the device (1, 1', 1") is provided with a drive unit (50) to rotate said support element (31) about the axis of rotation (501). The device (1, 1', 1") comprises an electronic control unit (ECU) operatively connected to the optical assembly (40) and to the drive unit (50), where this electronic control unit (ECU) is configured to acquire an image of said blade (5B), determine misalignment of the blade (5B) with respect to a reference direction (101) predetermined as optimal for acquiring the profile image (IP), drive the drive unit (50) so as to correct said misalignment and acquire, following correction of the misalignment, the profile image (IP).

## Description

### FIELD OF THE INVENTION

The present invention falls within the scope of the production of devices for identifying the morphology of a key and for its duplication. In particular, the invention relates to a device for reading the profile of a blade of a key. The present invention also relates to an apparatus for duplicating a key comprising said device.

### BACKGROUND ART

The use of devices for reading the profile of the blade of a key is known. Typically, these devices acquire at least one image of the profile of the blade of the key to be duplicated and compare this image, using suitable software, with images stored in a database, each of which assigned with a related identification code of a key blank. This comparison ends with display of the identification code of the key blank corresponding to that of the profile of the key to be used for duplication.

The patent application WO 2017/056054 illustrates and discloses a device for identifying the profile of a key provided with an illumination chamber equipped with an inlet opening through which the key to be identified is inserted. In this regard, the device comprises a supporting element defining a flat surface for supporting the key to be identified, where the extension of this flat surface is such that at least the blade portion of the key remains suspended inside the illumination chamber. The device proposed in WO 2017/056054 further comprises two scattered light sources arranged inside the illumination chamber in mutually opposite position so that each illuminates a corresponding side of the blade portion of the key. The device of WO 2017/056054 further comprises an optical unit through which the image of the blade profile is acquired. This optical unit includes a telecentric lens arranged so that its optical axis is substantially parallel to the plane defined by the surface for supporting the key.

The solution described in the patent application WO 2017/056054, just as other conceptually similar solutions, has the drawback of not guaranteeing perfect alignment of the blade with the optical axis of the telecentric lens. When this misalignment occurs, the image acquired via the telecentric lens does not represent the true shape of the profile. On the contrary, the image suffers from an error that can evidently cause identification of a profile from the true one. The patent US9563885 discloses a kiosk for duplicating keys provided with a reader device for identifying the profile of the key, where this device is also configured to detect the bitting of said key in order to duplicate it. To this end, the device provides for the use of two distinct optical units, each comprising a video camera, one to detect the profile of the key, the other to detect the bitting, where the two optical units define optical axes that are substantially orthogonal to each other.

The solution of US9563885 also sets the problem of aligning the blade of the key with the optical axis of the optical unit provided to detect the profile of the blade. This problem is tackled by providing a fixed alignment surface onto which one side of the key without bitting can rest. This surface forms a sort of guide for insertion of the key into the chamber along a predetermined direction. A mobile surface that holds the key against the alignment surface acts on the other side of the key *(with bitting).*

Another known solution, conceptually similar to that disclosed in US9563885, provides for guiding the key laterally by providing piston means that push the key on the two sides of the blade to align it along a predetermined direction.

However, experience has shown that both the aforesaid solutions *(use of guide surfaces or piston means)* are of limited effectiveness at least due to their poor operational versatility. In fact, these solutions can only be used for flat keys in which the bitting is defined only on one side of the key. Moreover, the presence of the two surfaces has a negative impact on the definition of the images that are acquired, above all with regard to detection of the bitting.

A further possible solution to the problem of aligning the key considers the possibility of providing an abutment surface against which the stop portion of the key is allowed to rest, typically defined at the initial section of the blade of the key. However, it has been observed that this solution is of limited efficacy, as the positioning precision depends on the surface condition of the stop portion *(i.e., on its condition of wear).* Moreover, in the bitting reading process, the abutment surface of the key is typically used as reference to determine the geometry of the blade. It is evident that contact between the two surfaces *(alignment and abutment)* can cause a reduction of the visibility in this region and hence a loss of accuracy of the images that are acquired both for identifying the profile of the blade and for identifying the bitting.

### SUMMARY

The main aim of the present invention is to provide a device for identifying the profile of the blade of a key that allows the above-mentioned drawbacks to be overcome or in any case mitigated. Within this aim, a first object of the present invention is to provide a device that allows precise alignment of the key with respect to an optimal direction for identifying the profile of said key. Another object of the present invention, linked to the previous one, is to provide a device that is operationally versatile, i.e., in which the principle with which this alignment is obtained can be applied to different types of key. Yet another object of the present invention is to provide a device for reading/identifying the profile of the blade in which the principle with which alignment is obtained does not have an impact on possible identification/reading of the bitting of said blade. A further object, linked to the previous one, is to provide a device for reading/identifying the profile of the blade having a configuration that is relatively simple and easy to produce. Not least object of the present invention is to provide a device that is reliable and easy to produce at competitive costs.

The aforesaid aim and objects are achieved through a device for reading the profile of a blade of a key according to Claim 1. In particular, the device comprises:
- an analysis chamber for positioning said blade, wherein said chamber is provided with an inlet section for insertion of said blade;
- a support assembly of the key including at least one support element that supports a flat surface for supporting at least one portion of the key, wherein said flat surface defines a reference plane, said support element being configured to support the key at the inlet section so that at least one portion of the blade of the key remains suspended in a cantilevered manner in the analysis chamber;
- a lighting assembly operatively associated with the chamber and configured to illuminate the blade;
- an optical assembly configured to provide at least one image of said profile of said blade and at least one image of the blade on the reference plane, wherein said optical assembly comprises at least one first optical unit including an objective lens and an optical sensor, wherein said objective lens defines an optical axis substantially orthogonal to the reference plane;
- an electronic control unit operatively connected to the optical sensor of said first optical unit and configured to acquire said image of said blade through said optical sensor.

According to the invention, the support element of the support assembly is rotatable about an axis of rotation orthogonal to the reference plane, said lighting assembly remaining in fixed position during rotation of said support element, wherein the device comprises a drive unit to rotate the support element about said axis of rotation, wherein said drive unit is controlled by the electronic control unit.

According to the invention, the electronic control unit is configured to:
- acquire an image of the blade through the optical assembly;
- determine the misalignment of the blade with respect to a reference direction predetermined to acquire said image of the profile;
- control said drive unit so as to correct said misalignment;
- acquire, following correction of the misalignment, said image of the profile through said optical assembly.

In accordance with an embodiment, the electronic control unit is configured to:
- identify characteristic elements of the blade of the key,
- determine a longitudinal direction along which the blade extends based on the mutual position of said characteristic elements;
- calculate the value of a characteristic parameter of the misalignment of the longitudinal direction with respect to the reference direction.

In accordance with a preferred embodiment, the optical sensor is a video camera and the electronic control unit is configured to acquire in sequence photograms of the blade on the reference plane during insertion of the blade into the inlet section.

In accordance with an embodiment, the optical assembly comprises at least one reflecting element arranged so as to divert the image of said profile of the key toward the objective lens of said first optical unit, said electronic control unit acquiring the image of the profile through the optical sensor of said first optical unit.

Preferably, the reflecting element is an optical prism arranged in a position opposite with respect to the inlet section of the analysis chamber.

In accordance with an embodiment, the optical assembly comprises a second optical unit including an objective lens defining another optical axis orthogonal with respect to the optical axis of the first optical unit, wherein said second optical unit comprises an optical sensor electrically connected to the electronic control unit, wherein said electronic control unit acquires said image of the profile through said optical sensor of said second optical unit.

In accordance with an embodiment thereof, the lighting assembly comprises a first light source and a second light source arranged in an opposite position so as to illuminate a corresponding side of the blade when it is inserted into the chamber and is resting onto said flat surface.

In accordance with an embodiment thereof, the chamber is delimited by two mutually opposite side walls made of transparent material extending on planes orthogonal to the reference plane, wherein each of said light sources of the lighting assembly comprises at least one LED strip operatively associated with one of said side walls and positioned outside the space comprised between said side walls.

Preferably, the lighting assembly is configured to generate infrared light.

In accordance with an embodiment, the support assembly of the device comprises a blocking element configured to exert a blocking force on the key so as to hold it onto the flat surface.

The blocking element rotates about the axis of rotation of the support element following rotation of said support element.

In accordance with an embodiment, the support element comprises a pin portion and a head portion extending from said pin portion and the blocking element comprises a pin portion and a head portion extending from said pin portion. In this embodiment, said support assembly further comprises a plate including a first portion and a second portion connected to each other and configured so as to define a seat at which said head portions of said support element and of said blocking element are positioned. The pin portion of the support element is pivotally connected in a seat defined by the first portion of the plate and the pin portion of the blocking element is pivotally connected in a seat defined by the second portion of the plate; the head portion of the support element defines said flat surface and the head portion of the blocking element defines a gripping surface facing the flat surface. The head portions of the two elements are configured and mutually arranged so that the head portion of the support element drives the head portion of the blocking element in rotation.

Preferably, a spring element that thrusts the blocking element toward said support element is inserted into the seat defined by the second portion of the plate.

In accordance with a preferred embodiment, said first optical unit is arranged in a position above the chamber and said drive unit is arranged in a position below said chamber.

In accordance with an embodiment thereof, the drive unit comprises an electric motor and a transmission mechanism to transmit motion from the shaft of said electric motor to the support element of the support assembly.

In a possible embodiment thereof, the mechanism comprises:
- a disc driven by the shaft of said electric motor;
- a bushing integral with the disc and arranged in an eccentric position with respect to an axis of rotation of the disc;
- a transmission bar slidingly coupled to said bushing and rigidly connected to the support element,
wherein, following rotation of the disc, the transmission bar is driven in rotation by the bushing and wherein rotation of the transmission bar determines a corresponding rotation of the support element.

The present invention also relates to an apparatus for duplicating keys characterized in that it comprises a device according to the invention.

The present invention also relates to an automatic magazine for storing key blanks, characterized in that it comprises a device according to the invention.

### LIST OF FIGURES

Further features and advantages of the present invention will be more apparent from the description of preferred, but non-exclusive, embodiments of a device according to the invention illustrated by way of example in the accompanying drawings, wherein:
- figure 1 is a block diagram of a possible embodiment of a device according to the invention;
- figures 2A and 2B are respectively a view of a key whose profile can be read/identified by a device according to the invention and of the images of said key that can be acquired through this device;
- figures 3A, 3B are views illustrating an operating principle of the device of figure 1;
- figure 4 is a block diagram of another possible embodiment of a device according to the invention;
- figure 5 is a perspective view of a device according to the invention;
- figure 6 is another view of the device of figure 5 with some components removed;
- figure 7 is a side view of the device of figure 5;
- figure 8 is a view according to the section plane VIII-VIII of figure 7;
- figure 9 is a front view of the device of figure 5;
- figure 10 is a view according to the section plane X-X of figure 9;
- figures 11 and 12 are detail views respectively of the detail A of figure 8 and of the detail B of figure 10;
- figure 13 is a view of an assembly of components of the device of figure 5;
- figure 14 is a perspective view of an assembly of components of the device of figure 5;
- figure 15 is a sectional perspective view of the device of figure 5;
- figure 16 is a perspective view of a further assembly of components of the device of figure 5;
- figures 17 and 18 are exploded views from different observation points of the assembly of components of figure 14;
- figures 18A and 19 are perspective views from different observation points of two components of the assembly of components of figure 14;
- figures 20 and 21 are views illustrating an operating principle of the device of figure 5;
- figure 22 is a sectional view relating to a further possible embodiment of a device according to the invention;
- figures 23 and 24 are perspective views of an apparatus for duplicating keys comprising a device according to the invention;
- figure 25 is a further perspective view of the apparatus of figure 23 with some components removed;
- figure 25A is a detail view of the detail C of figure 25.

In the figures, the same references indicate the same parts or the same components.

### DETAILED DESCRIPTION

With reference to the aforesaid figures, the present invention relates to a device 1, 1', 1" for reading/identifying the profile of the blade 5B of a key 5. In particular, the device 1, 1', 1" can be used to read/identify the profile of the blade 5B of different types of keys, in particular, but not exclusively, keys for locks and some types of keys for motor vehicles. Purely for descriptive purposes, the figures show a key 5 for a cylinder lock with bitting provided only on one side of the blade 5B. Nonetheless, the device 1, 1', 1" can be used to detect the profile of any key in which at least one portion of the key, distal from the end of the blade, extends between parallel planes.

The term *"profile"* of the blade of the key is meant as the contour of this latter considered on a first plane orthogonal to the direction along which the blade extends. Instead, the term *"bitting"* of the blade is meant as its contour considered on a second reference plane parallel to the direction along which the blade extends and orthogonal to said first reference plane.

The device 1, 1', 1" can be autonomous or integrated in an apparatus for duplicating keys *(such as an electronic duplicator or a kiosk for duplicating keys with automatic magazine)* or an apparatus for providing a key blank, which can, for example, be an automatic magazine configured solely for releasing a key blank, hence without a duplication function.

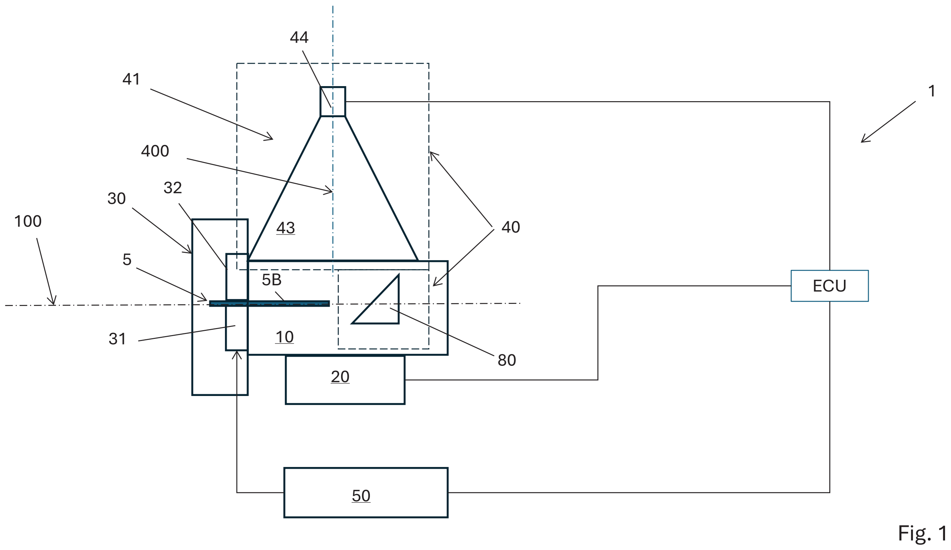

Figure 1 is a schematic view of a possible embodiment of a device *(indicated with the reference* 1) according to the invention. The device 1 comprises an analysis chamber 10 *(hereinafter chamber 10)* provided with an inlet section 9 for inserting at least one portion of the blade 5B of the key 5 of which at least the profile requires to be identified/read. To indicate this key 5, hereinafter the expression *"key 5 in question "* will also be used.

The device 1 comprises a support assembly 30 that supports the key 5 at the inlet section 9 and such that at least one portion of the blade 5B of the key 5 remains suspended in a cantilevered manner in the chamber 10. Specifically, the support assembly 30 comprises a support element 31 that supports a flat surface 300 integral with said support element 31. This surface 300 is a surface for supporting the key 5 and identifies a reference plane 100. In particular, this surface 300 is adapted to provide a support for the key 5, preferably for its head 5A, while at least one portion of the blade 5B remains suspended in a cantilevered manner in the chamber 10, as already indicated above.

The device 1 comprises a lighting assembly 20 operatively associated with the chamber 10 to illuminate the blade 5B of the key 5 after it has been inserted through the inlet section 9. The lighting assembly 20, when activated, generates a diffused light around the blade 5B, i.e., it illuminates the blade 5B of the key 5 from several directions so that the images thereof are highlighted with respect to the background.

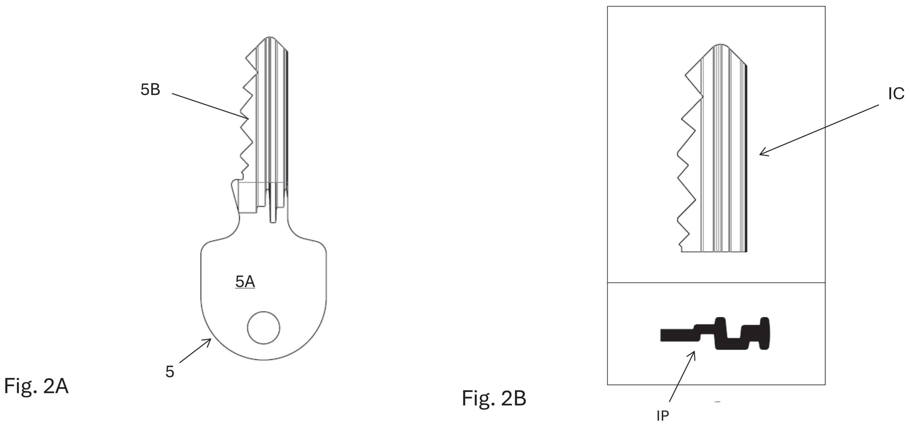

The device 1 according to the invention comprises an optical assembly 40 configured to provide at least one image of the profile of the blade 5B and at least one image of said blade 5B captured on the reference plane 100. In this regard, by way of example, figure 2B shows the image *(hereinafter also indicated with the term "profile image IP")* of a profile of a flat key *(shown in* *figure 2A**)* for a cylinder of a lock.

Figure 2B also shows the image *(reference IC)* of the blade 5B on the reference plane 100. In substance, the image IC of the blade 5B is the image of one of the two main faces of the blade 5B captured on the reference plane 100 onto which the key 5 is supported.

The expression *"optical assembly"* is generically meant as the totality of the optical means/components that as a whole are used to acquire the two images IP, IC. In general, the optical assembly comprises at least one optical unit 41 including an objective lens 43 and at least one optical sensor 44 that detects the image framed by the objective lens 43, converting it into electrical signals. The objective lens 43 defines an optical axis 400 arranged so as to be orthogonal to the reference plane 100. In particular, the objective lens 43 frames the blade 5B on the reference plane 100 allowing the optical sensor 44 to acquire at least one image IC. The optical axis 400 maintains a predetermined and fixed position with respect to the support element 31 and to the chamber 10 during normal operation of the device.

The device 1 according to the invention comprises an electronic control unit ECU (*hereinafter indicated simply with the initials ECU),* which is operatively connected to the optical assembly 40. In other words, the ECU is electrically connected to the optical sensor 44 to acquire the electrical signals generated by the optical sensor 44 and characteristic of the image framed. Preferably, the ECU is also connected to the lighting assembly 20, to activate and deactivate it. According to the present invention, the support element 31 of the key 5 *(i.e., the element that supports the flat surface 300 on which the key 5 in question is supported)* is rotatable about at least one axis of rotation 501, where this axis is substantially orthogonal to the aforesaid reference plane 100. To this end, the device 1 is provided with a drive unit 50 to rotate the support element 31 about this axis of rotation 501. The surface 300 rotates integrally with the support element 31 about the axis of rotation 501.

According to the invention, the lighting assembly 20 is physically independent from the support element 31, i.e., it does not rotate and/or does not move during rotation of the support element 31 about the axis of rotation. In particular, the lighting assembly 20 maintains a fixed position with respect to the analysis chamber 10.

The drive unit 50 comprises at least one electric actuator (*preferably an electric motor)* directly or indirectly connected to the support element 31, where this electric actuator is actuated *(i.e. controlled)* by the ECU.

According to the invention, the ECU controls the drive unit 50 as a function of misalignment of the blade 5B with respect to a predetermined reference direction 101. The expression *"reference direction 101"* is meant as an optimal direction for acquiring the image IP of the profile of the blade 5B. This reference direction 101 is parallel to the reference plane 100, i.e., to the plane on which the key 5 in question is supported. The reference direction 101 is fixed in a reference system integral with the analysis chamber 10.

Specifically, according to the invention, the ECU is configured to:
- acquire the image IC of the blade 5B captured on the reference plane 100;
- determine misalignment of the blade 5B with respect to the reference direction 101 based on the image IC of the blade 5B acquired;
- operate the drive unit 50 so as to correct this misalignment;
- acquire the image IP of the profile following correction of said misalignment.

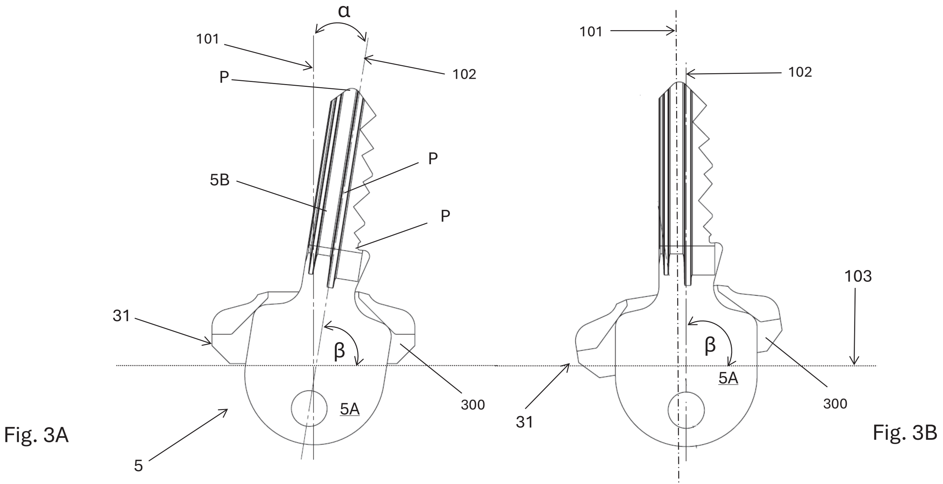

To this end, the ECU comprises a processor that acquires and processes the electrical signals generated by the optical sensor 43 through which the image of the blade 5B on the reference plane 100 is detected. Through suitable software, the ECU thus processes the image of the blade 5B and determines misalignment of the blade 5B with respect to the aforesaid reference direction 101. The term *"misalignment"* is meant as the inclination of the longitudinal direction 102 along which the blade 5B extends with respect to the reference direction 101. This misalignment is thus zero when the two directions 101, 102 in question are parallel. Specifically, the ECU determines the value of a characteristic parameter of the misalignment, preferably an angle *(indicated with α in* *figure 3A**),* existing between the reference direction 101 and the longitudinal direction 102 of the blade 5B. Following this determination, the ECU operates the drive unit 50 *(in particular its electric actuator)* to correct, i.e., at least to reduce, this misalignment.

Preferably, the ECU controls the drive unit 50 so as to rotate the element 31 of the support assembly 30 until the misalignment is removed, i.e., a condition such that the longitudinal direction 102 of the blade 5B is parallel to the reference direction 101. In this condition, the key 5 is considered aligned with the reference direction 101. Its blade 5B is thus oriented in the optimal direction for acquiring the profile image IP.

Figures 3A and 3B allow a better understanding of the operating principle described above. In particular, figure 3A shows a possible condition of misalignment of the key 5 that could occur following manual positioning of the key 5 on the supporting surface 300. The longitudinal direction 102 along which the blade 5B extends is inclined by an angle α with respect to the reference direction 101. Figure 3B instead shows the condition of alignment reached after rotation of the support element 31 determined by the drive unit 50 following its operation controlled by the ECU. In the condition of figure 3B, the longitudinal direction 102 of the key 5 is thus parallel to the reference direction 101. By comparing figures 3A and 3B, it is possible to observe the variation of the angular position *(identified by the angle β between the longitudinal direction 102 and a direction 103 orthogonal to the reference direction 101)* of the support element 31, in relation to which the key 5 instead remains in the same position.

According to the invention, after misalignment of the key has been corrected, the ECU acquires the final profile image IP. Through suitable software, the ECU determines the identification code of the key blank corresponding to the profile acquired. Preferably, the ECU is also configured to process the image IC of the blade 5B captured on the reference plane 100, i.e., also to identify the bitting of said key. In other words, the ECU processes the image IC of the blade 5B obtaining the data relating to its bitting, data that can be used for possible duplication of the key. In this regard, identification of the bitting is particularly useful when the reader is integrated in a key duplication apparatus *(duplicating machine or kiosk for duplicating keys).* In accordance with a preferred embodiment, regarding processing the image IC of the blade 5B, the ECU identifies characteristic elements/references of said blade. For example, in the case of the key of figure 3A, these characteristic elements/references can be the longitudinal grooves P₁, the end of the key P₂, and/or the stop P₃ defined between the blade 5B and the head 5A of said key. Based on the mutual position of these characteristic elements/references, the ECU determines the direction along which the blade 5B extends *(longitudinal direction 102),* where this direction is considered in a reference system integral with the analysis chamber 10 *(same system with respect to which the reference direction 101 is considered).*

After the longitudinal direction has been determined, the ECU calculates the inclination *(i.e., the value of a misalignment parameter)* of this longitudinal direction 102 with respect to the reference direction 101 and based on this inclination establishes the value and the direction of angular rotation that must be imposed on the support element 31 to reduce *(preferably eliminate)* this misalignment. The ECU then send a control signal to the drive unit 50 *(in particular to its electric actuator)* following which the support element 31 rotates in accordance *(in terms of rotation angle and direction)* with what was previously determined.

In accordance with a preferred embodiment, the optical unit 41 is positioned above the reference plane 100, considering it in horizontal position. Therefore, the objective lens 43 frames the upper surface of the blade 5B of the key. In general, within the scope of the present description, the terms *"upper"* or *"lower"* are considered with respect to a condition in which the reference plane 100 is substantially horizontal.

Again, with reference to the optical assembly 40, the objective lens 43 is preferably of telecentric type. Nonetheless, another type of objective lens could be used.

With reference to the optical sensor 44, it can be of CCD or CMOS type. In any case, the objective lens 43 is configured to convey the light rays generated by the lighting assembly 20 toward the optical sensor 44, which thus detects the image of the key framed by said objective lens. The optical assembly 40 further comprises conversion means for analogue/digital conversion of the electrical signals representative of the image detected by the optical sensor 44. In the case in which the sensor 44 is of CMOS type, conversion of the signal can be obtained within the sensor itself.

In the case in which the optical sensor 44 is a video camera, the ECU can acquire in sequence photograms of the blade 5B on the reference plane 100. Therefore, identification, by the ECU, of the characteristic elements/references of the blade 5B *(useful for determining the longitudinal direction 102)* could commence as soon as the blade 5B is inserted into the chamber 10 and terminate as soon as the key is completely inserted. This can allow rapid determination of any condition of misalignment and hence rapid correction of this condition. Again, with reference to figure 1, the optical assembly 40 of the device 1 comprises a reflecting element configured to divert the light generated by the lighting assembly 20 from a direction parallel to the reference plane 100 *(i.e. orthogonal to the optical axis 400)* to a direction orthogonal to said reference plane 100 *(i.e., parallel to the optical axis 400).* Preferably, the reflecting element consists of a right-angle optical prism 80 arranged in a substantially opposite position to the inlet section 9 of the chamber 10. The optical prism 80 comprises two flat surfaces arranged at 90° and a third surface *(inclined with respect to the two orthogonal flat surfaces)* at which the light rays are diverted through 90°. The optical prism 80 is arranged so that one of its two flat surfaces is parallel to the optical axis 400 of the optical unit 40, while the other flat surface is arranged orthogonally to said optical axis 400. Through the optical prism, the profile image IP of the key 5 supported on the reference plane 100 is reflected toward the same objective lens 43 used to frame the blade 5B of the key 5 on the reference plane 100. Therefore, the profile image IP of the blade 5B of the key 5 in question is also acquired with the same optical unit 41 used to acquire the image of the blade 5B on the reference plane 100.

In the device 1 of figure 1, the optimal reference direction 101 for acquiring the profile image IP is thus orthogonal to one of the two *(mutually orthogonal)* surfaces of the aforesaid optical prism 80.

With reference once again to figure 1, the lighting assembly 20 is preferably configured so as to generate infrared light. This solution allows clear images to be acquired regardless of the colour of the blade 5B of the key 5 in question. Moreover, infrared radiation is distinguished by a wavelength that is scarcely present in environments in which a device for reading the profile of a key is typically used. Consequently, any radiation passing through the section 9 of the chamber provided for insertion of the key 5 does not affect its illumination and hence the quality of the image.

In any case, the scope of the invention also includes the possibility of the lighting assembly 20 being configured to generate light in a different wavelength to infrared light, i.e., in the visible or UV spectrum. In the aforesaid preferred case of the use of infrared light, an IR pass filter, i.e., a filter capable of allowing only the infrared radiation to pass, can be mounted on the objective lens 43 of the optical assembly 40.

In general, the lighting assembly 20 must be activated to allow the ECU to acquire the image IC of the blade 5B on the reference plane 100 and the profile image IP.

With reference once again to figure 1, the axis of rotation 501 of the support element 31 of the support assembly 30 is thus parallel to the optical axis 400 of the optical unit 41. In a possible embodiment, not shown in the figures, the support assembly 30 could be configured so as to allow the support element 31 also to rotate about other rotation axes, for example about another axis parallel to the reference plane 100.

With reference once again to the support assembly 30, this preferably also comprises a blocking element 32 that exerts a blocking force on the key 5 so as to hold it stably supported on the flat surface 300 integral with the support element 31. In particular, the blocking element 32 is adapted to act on a face of the key 5 opposite the one supported on the flat surface 300. Preferably, the blocking element 32 rotates integrally with the support element 31. In particular, the blocking element 32 is configured so as to rotate together with the support element 31 about the axis of rotation 501.

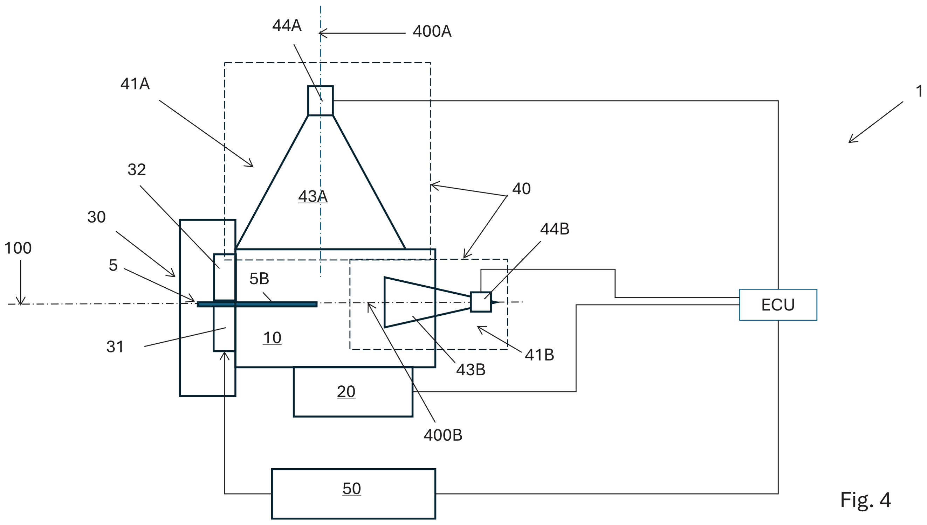

Figure 4 refers to a second possible embodiment of a device *(indicated with the reference 1')* that differs from the first embodiment substantially due to a different configuration of the optical assembly 40. In fact, in the device 1' the optical assembly 40 comprises two distinct optical units 41A, 41B: a first optical unit 41A to acquire the image IC of the blade 5B on the reference plane 100 and a second optical unit 41B used specifically to acquire the profile image IP. The first optical unit 41A comprises an objective lens 43A defining an optical axis 400A and an optical sensor 44A *(connected to the ECU)* and is substantially configured in the same way as the one of the device 1 of figure 1. The second optical unit 41B comprises an objective lens 43B defining an optical axis 400B parallel to the reference plane 100 and an optical sensor 44B electrically connected *(directly or indirectly)* to the ECU. The optical axis 400B of the objective lens 43B of the second optical unit 41B is thus orthogonal with respect to the optical axis of the objective lens 43A of the first optical unit 41A *(the two optical axes 400A, 400B may or may not be intersecting).* In the device 1' of figure 4, the reference direction 101 is parallel to the optical axis 400B of the objective lens 43B of the optical unit 41B specifically provided to acquire the profile image IP.

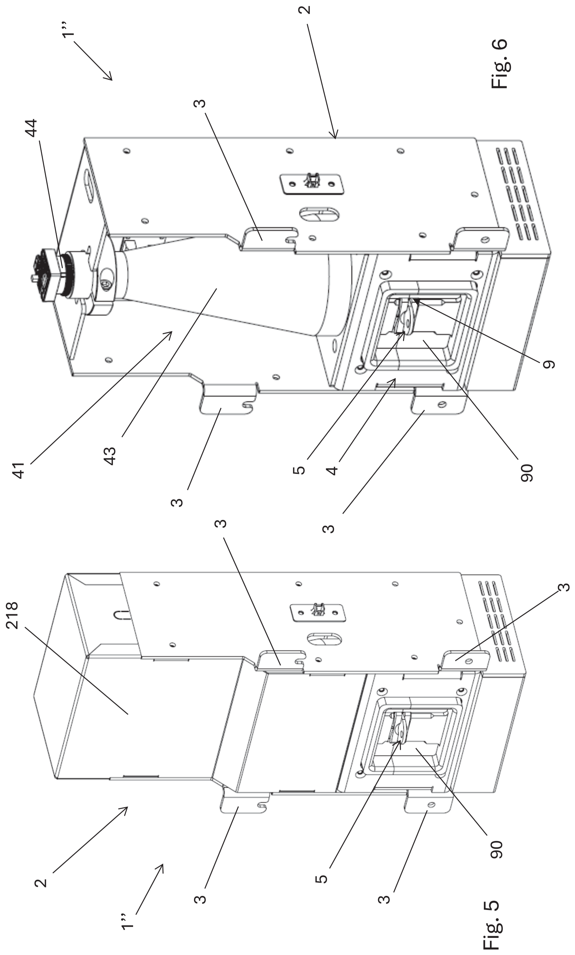

Figures 5 to 21 refer to an embodiment of a device *(indicated with the reference 1")* according to the invention configured in accordance with the one schematized in figure 1. These figures do not show the ECU, which is nonetheless connected to the optical assembly 40 and to the drive unit 50 in the same way as schematized in figure 1. Moreover, in this embodiment the ECU is also connected to the lighting assembly 20 to control its activation and deactivation.

In accordance with the diagram of figure 1, the device 1" thus comprises an optical assembly 40 provided with a single optical unit 41 including an objective lens 43 preferably of telecentric type and an optical sensor 44 preferably of CMOS type. The optical unit 41 is arranged above the chamber 10 and defines an optical axis 400 orthogonal to the reference plane 100 and parallel to the axis of rotation 501 of the element 31 of the support assembly 30 that supports the key 5 in question.

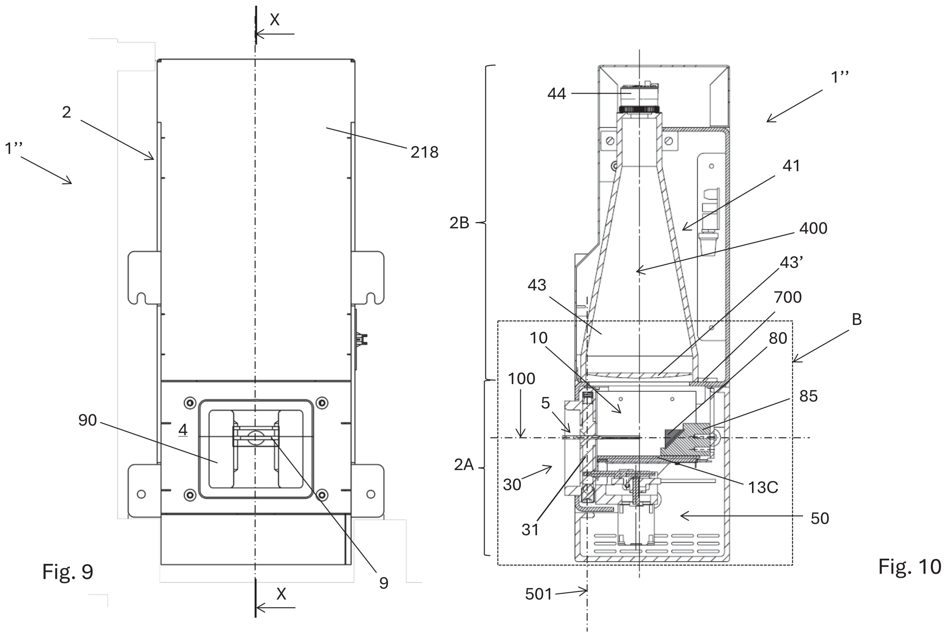

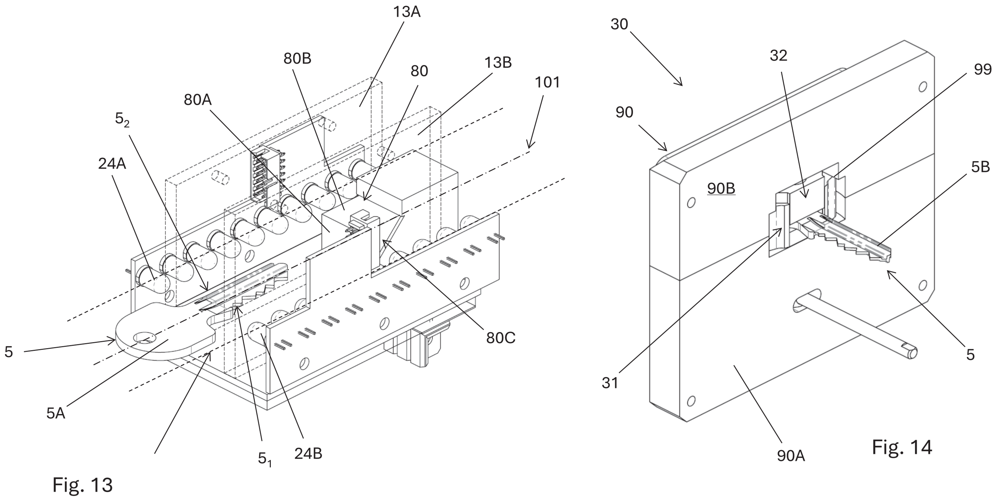

The optical assembly 40 of the device 1" comprises an optical prism 80 arranged in the chamber 10 so that a first flat surface 80A thereof extends on a plane parallel to the optical axis 400, while a second flat surface 80B thereof *(orthogonal to the first flat surface 80A)* extends on a plane perpendicular to said optical axis 400. The optical prism 80 comprises an inclined reflecting surface 80C inclined through 45° with respect to the other two surfaces 80A, 80B *(see* *figures 10* *and* *13**).* Following this arrangement, the light generated by the lighting assembly 20 and diffused in the chamber 10 is diverted toward the lens 43' of the telecentric objective lens 43. The profile image IP of the key 5 in question is thus reflected by the optical prism 80 toward the optical sensor 44 of the optical unit 41. In accordance with what was described with reference to figure 1, the same optical unit 41 used to acquire the image IC of the blade 5B on the reference plane 100 is used to acquire the profile image IP of the same blade.

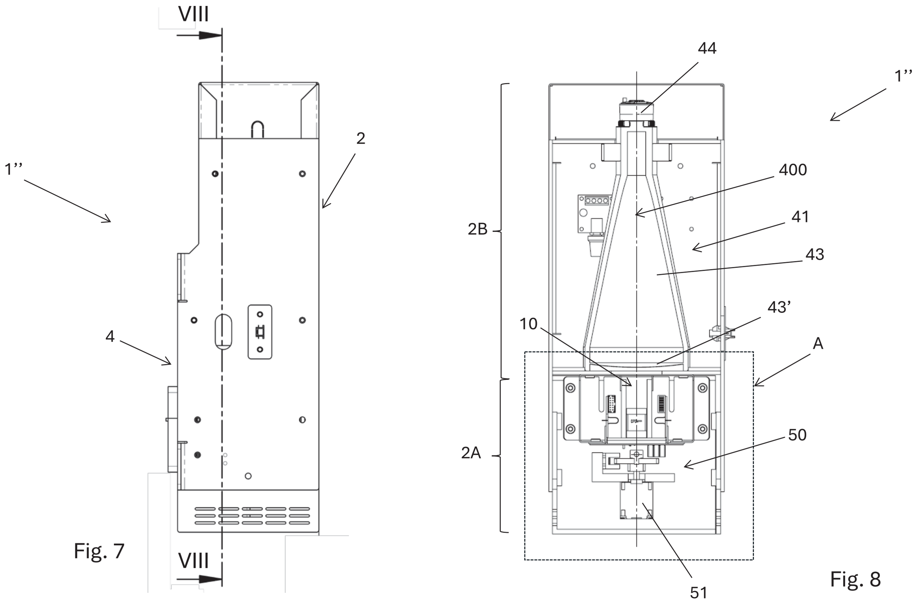

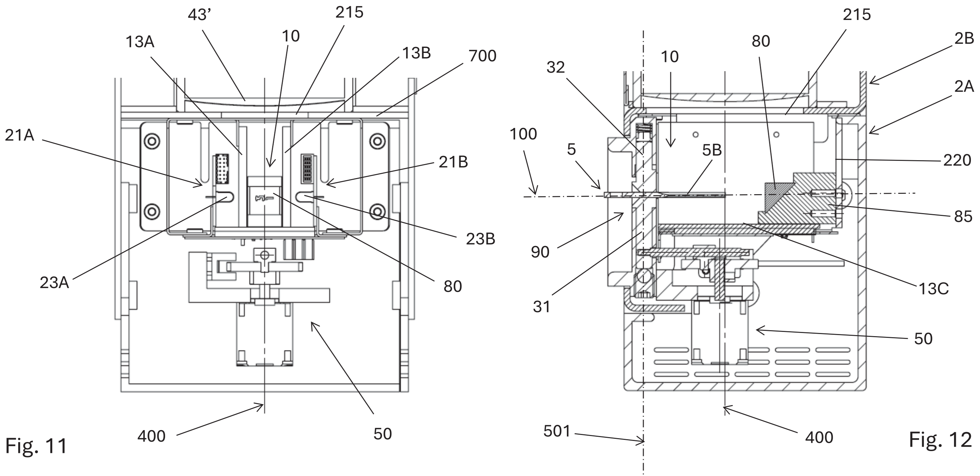

The device 1" comprises a containing structure 2 having a substantially prismatic configuration. This structure 2 comprises a lower part 2A in which the chamber 10 is delimited and an upper part 2B in which the optical unit 41 of the optical assembly 40 is arranged and supported *(see* *figures 8* *and* *10**).* The lower part 2A is peripherally closed and comprises a front wall 4 *(**figures 6* *and* *8**)* at which the inlet section 9 for insertion of the key 5 in question into the chamber 10 is defined. The lower part 2A is open at the top *(at the opening 215 in* *figures 11 and 12**)* to allow the objective lens 43 positioned in the upper part 2B to frame the space inside the chamber 10.

The upper part 2B rests on the lower part 2A at a support plane 700. The objective lens 43 of the optical unit 41 is arranged in, and supported by, the upper part 2B of the structure 2 so that its optical axis 400 is orthogonal to the reference plane 100 defined by the surface 300 of the support assembly 30. In particular, the lens 43' of the telecentric objective lens 43 is positioned at the opening 215 and extends so as to frame the part of the chamber 10 in which the blade 5B of the key 5 in question is destined to be arranged in a cantilevered manner and the part in which the optical prism 80 is positioned *(see* *figure 10**).* The upper part 2B can comprise a removable wall 218 *(indicated in* *figures 5* *and* *9**)* to allow access to the telecentric objective lens 43 for inspection and/or maintenance operations. With reference to the optical prism 80, as visible in figure 10, this is supported by a support 85 in turn connected by means of a bracket 220 to the lower part 2A of the containing structure 2 *(see* *figure 12**).*

In the case *(shown in the figures)* in which the device 1" is destined to be installed in a more complex apparatus *(for example a kiosk for duplicating keys)* then the structure 2 can comprise brackets or other connection means *(indicated with the reference 3 in* *figures 5 and 6**)* adapted to allow connection to structural parts of said apparatus. Instead, in the case in which the device 1 is destined for stand-alone use, the structure 2 could be without these connection means. With reference to the sectional views in figures 11 and 13, the chamber 10 is laterally delimited by a pair of side walls 13A, 13B made of translucent material. The two side walls 13A, 13B are arranged in a specular way with respect to a reference plane orthogonal to the reference plane 100 and preferably passing through the optical axis 400 of the optical unit 40 *(see* *figure 11**).* The side walls 13A, 13B are indicated hereinafter also with the expression diffusion walls 13A, 13B as they have the function of diffusing the light generated by the lighting assembly 20. More precisely, the diffusion walls 13A, 13B diffuse light in the space delimited between these walls and in which the blade 5B of the key 5 whose profile is to be read is destined to be positioned *(see* *figures 11* *and* *13**).*

In accordance with a preferred embodiment, the lighting assembly 20 of the device 1" comprises a first light source 21A and a second light source 21B arranged in an opposite position so as to illuminate a corresponding side 5₁, 5₂ *(see* *figure 13**)* of the blade portion 5B of the key 5. Preferably, each light source 21A, 21B comprises a corresponding LED strip 24A, 24B operatively associated with one of the aforesaid diffusion walls 13A, 13B, where each LED strip 24A, 24B is arranged outside the space comprised between the two parallel diffusion walls 13A, 13B. With reference to figures 8 and 13, it can be observed that for each light source 21A, 21B, each LED strip 24A, 24B is arranged in a position adjacent to the related diffusion wall 13A, 13B, but preferably detached therefrom. Alternatively, the LEDs 24A, 24B could be at least in part embedded in the related diffusion wall 13A, 13B. Preferably, the LED strips 24A, 24B are arranged according to a direction substantially orthogonal to the optical axis 400 and thus parallel to the reference plane 100 of the support assembly 30.

Figure 13 shows in detail the arrangement of the components of the light sources described above. In this regard, it is highlighted how the LED strips 24A, 24B are arranged parallel to the reference direction 101 indicative of correct alignment of the key 5 for acquiring the profile thereof. As illustrated, the LED strips 24A, 24B preferably extend parallel to the reference direction 101 for the whole of the length of the related diffusion walls 13A, 13B considered along the same reference direction 101. In figure 13 the diffusion walls 13A, 13B are illustrated with dashed lines to highlight the LED strips. With reference to figure 12, the two diffusion walls 13A, 13B preferably extend in such a way that at least one portion of the optical prism 80 *(preferably all of the optical prism 80)* is comprised between said walls *(condition that can also be perceived from* *figure 12**).*

With reference once again to figures 11 to 13, the chamber 10 is delimited at the bottom by a bottom wall 13C extending orthogonally to the two side walls 13A, 13B *(see in particular* *figures 4* *and* *6**).* The bottom wall 13C is preferably made of translucent material. In this regard, in a possible variant *(not shown in the figures),* the lighting means could comprise a further light source associated with the bottom wall 13C.

In any case, each light source 21A, 21B of the device 1" is preferably electrically connected to the ECU that controls its activation and deactivation. In particular, to acquire the image IC of the blade 5B on the reference plane 100 it is necessary to activate at least one of the light sources 21A, 21B associated with the side walls 13A, 13B, preferably both. Moreover, to acquire the profile image IP correctly, it is preferable to activate both of the light sources 21A, 21B so that the key 5 is illuminated on both sides 5₁, 5₂.

With reference to figure 14, the support assembly 30 of the device 1" preferably comprises a plate 90 including a lower portion 90A to which the support element 31 is pivotally connected and an upper portion 90B to which the blocking element 32 is pivotally connected. The two portions 90A and 90B are connected to each other *(preferably through pins, not shown in the figures)* and configured so as to define a window 99 at which the two elements 31, 32 are adjacent. Together, the window 99 and the mutual position of the two elements 31, 32 define the inlet section 9 through which the blade 5B of the key 5 is inserted in a cantilevered manner into the chamber 10.

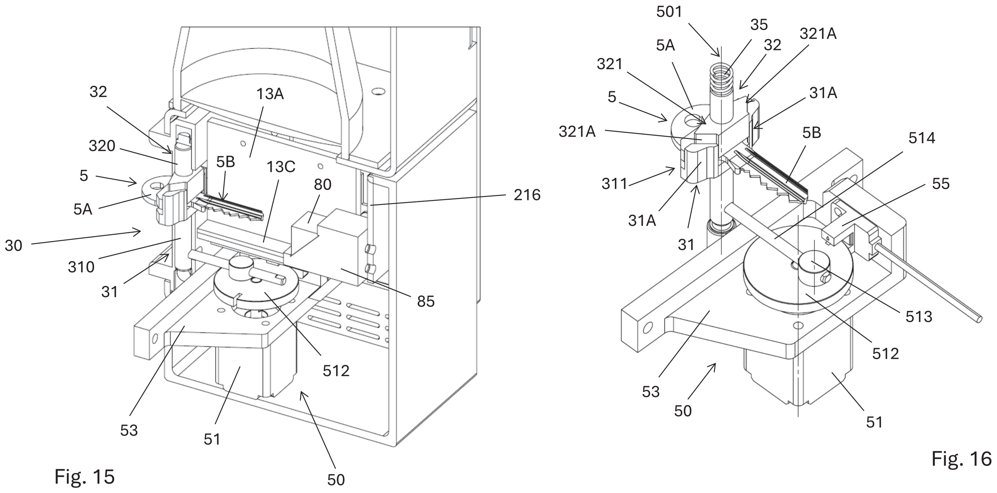

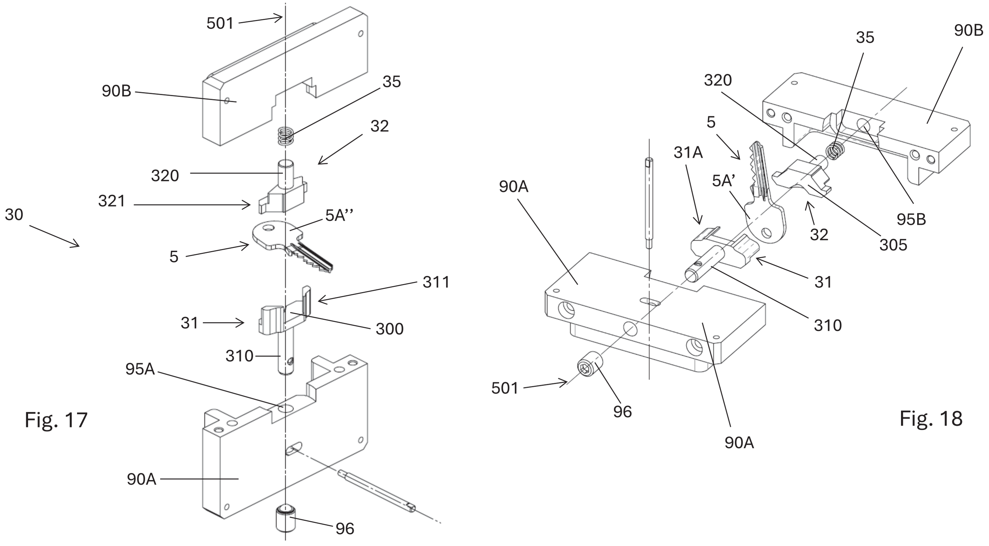

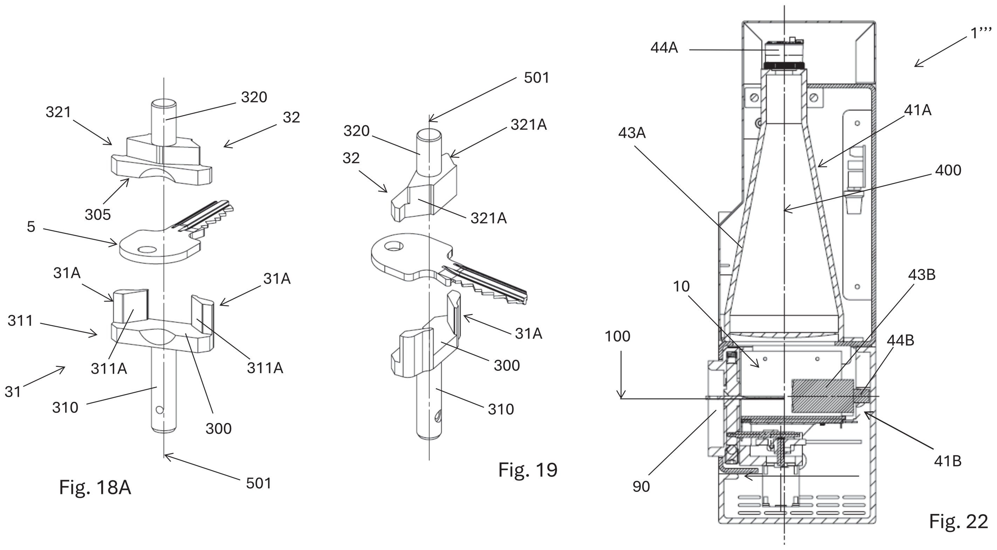

Figures 15 to 18A show a possible embodiment of the elements 31, 32. The support element 31 comprises a head portion 311 defining the flat surface 300 that identifies the reference plane 100. The head 5A of the key 5 is destined to be supported on this flat surface 300 with a first surface 5A' thereof *(indicated in* *figure 18**).* The support element 31 comprises a pin portion *310 (which extends from the head portion 311)* pivotally connected to the lower portion 90A of the plate 90. More precisely, a seat 95A is provided in the lower portion 90A, into which said pin portion 310 is rotatably inserted so as to create a cylindrical coupling that generates the axis of rotation 501 of the support element 31 *(see* *figures 17 and 18**).* Preferably, a support cylinder 96, which acts as a sort of axial bearing for the support element 31 supporting and facilitating its rotation, is provided in the bottom of the seat 95A.

The blocking element 32 of the support structure 30 comprises a head portion 321 defining a gripping surface 305 *(indicated in* *figure 18**)* destined to act on a second surface 5A" *(see* *figure* 17) of the head 5A of the key 5 opposite the aforesaid first surface 5A'. The blocking element 32 comprises a pin portion 320 extending from the head portion 321 and is pivotally connected to the upper portion 90B of the access plate 90. Specifically, the pin portion 320 is inserted rotatably into a seat 95B of the access plate 90 *(cylindrical coupling).* A spring element 35, which constantly thrusts the blocking element 32 toward the head portion 311 of the support element 31, is arranged in this seat 95B. Therefore, when the head 5A of the key 5 is arranged between the two head portions 311, 321 of the two elements 31, 32, the blocking element 32 exerts a force that stably holds the key 5 against the flat surface 300 of the support element 31. Together, the two elements 31, 32 act as a sort of *"gripper"* that grips the key 5, preferably at its head 5A.

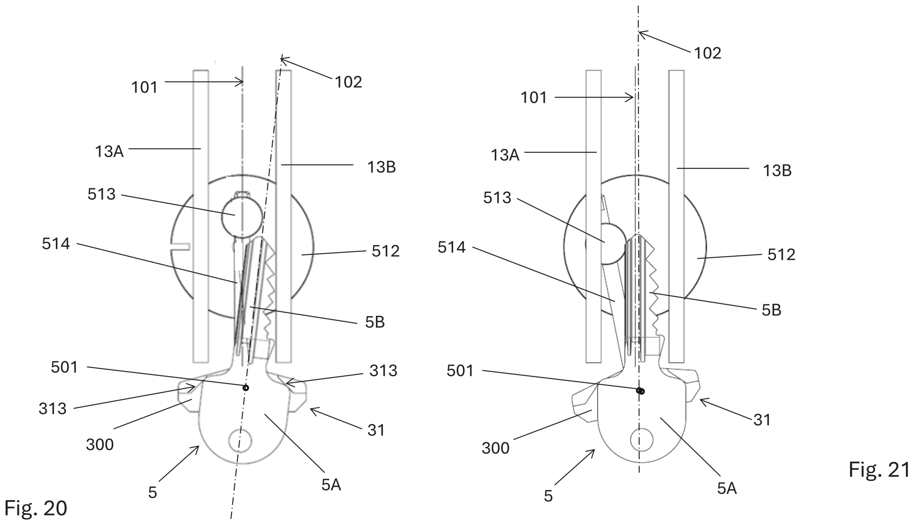

With reference to figure 20, the head portion 311 of the support element 31 defines two abutment portions 313 for the head portion 5A of the key. These portions 313 emerge from the flat surface 300 and are spaced apart so as to define a space sufficient for the blade 5B of the key 5 to pass through, but not sufficiently wide for its head 5A to pass through. In practice, these portions allow only the blade 5B to enter the analysis chamber 10 and keep the head 5A outside it.

With reference in particular to figures 18 and 19, the head portion 311 of the support element 31 and the head portion 321 of the blocking element 32 are configured so as to mutually engage in rotation about the axis 501. In other words, the two head portions 311, 312 rotate together about the axis of rotation 501 following activation of the drive unit 50.

In the embodiment shown in the figures, the head portion 311 of the support element 31 has a substantially *"forked"* configuration, defining two opposite portions 31A that extend orthogonally with respect to the flat surface 300. The head 5A of the key 5 can be positioned between these portions. For each of these portions 31A a contact surface 311A is defined adjacent to, preferably in contact with, a corresponding contact surface 321A of the head portion 321 of the blocking element 32. In particular, the contact surfaces 311A of the support element *31 (and hence also the contact surfaces 321A of the blocking element 32)* extend on two intersecting planes. Following rotation of the support element 32 *(in one or the two possible directions),* one of its contact surfaces 311A pushes on a contact surface 321A of the blocking element 32 causing it to rotate about the axis 501. In practice, as perceivable from figure 16, the contact surfaces 312A, 311A act as elements transmitting the rotation motion between the two elements 31, 32.

With reference to figures 5 and 6, for example, it can be observed that the plate 90 of the support assembly 30 in practice forms a portion of the front wall 4 of the lower part 2A of the containing structure 2 of the device 1". With reference to figures 10 and 15, it can also be seen how at the same time the plate 90 frontally delimits the analysis chamber 10 on a plane substantially orthogonal to the two side walls 13A, 13B delimiting said chamber.

With reference in particular to figures 11, 12 and 15, the drive unit 50 is operatively arranged in a position below the chamber 10 so as to reduce the transverse overall dimensions of the device 1. In the embodiment illustrated, the drive unit 50 comprises an electric motor 51 *(preferably of stepper type)* and a mechanism 52 for transmitting motion through which rotation of the shaft of the electric motor 51 is transferred to the support element 31 of the support assembly 30. The electric motor 51 is electrically connected to the ECU that controls the drive. As can be seen in figures 15 and 16, the electric motor 51 is supported in the space below the chamber 10 through a support plate 53 supported by the lower part 2A of the structure 2. Preferably, the electric motor 51 is supported so that its axis 510 is aligned *(parallel or coincident)* with the optical axis 400 of the optical unit 41, i.e. perpendicular to the reference plane 100. In the embodiment shown, the mechanism 52 comprises a disc 512 shrink fitted onto the shaft of the electric motor 51 and hence coaxial to said shaft. The mechanism 52 further comprises a bushing 513 integral with the disc 512 and arranged in an eccentric position with respect to the axis of rotation 510 of the motor 51 *(see* *figure 16**).* The mechanism 52 further comprises a transmission bar 514, preferably with a cylindrical section, slidingly coupled to the bushing 513 and rigidly connected to the pin portion 310 of the support element 31.

This transmission bar 514 is thus constrained in rotation to the support element 31, and vice versa, about the axis of rotation 501. Rotation of the disc 512, caused by the electric motor 51, moves the bushing 513 along an eccentric trajectory with respect to the axis of rotation 510. This movement causes rotation of the transmission bar 514 and consequently of the support element 31 of the support assembly 30 about the axis of rotation 501.

In accordance with a possible, and hence non-exclusive, embodiment, the components of the drive unit 50 are configured so as to cause a rotation of the support element 31 about the axis 501 comprised in a range from 0 to 40 degrees for each of the two possible directions of rotation. From figures 20 and 21 it is possible to understand in detail the operating principle of the aforesaid drive unit 50. Figure 20 shows a possible orientation, in particular a possible condition of misalignment of the key 5 with respect to the reference direction 101, condition that could occur when the key 5 is inserted into the chamber 10 and clamped between the support element 31 and the blocking element 32 *(not shown in* *figures 20 and 21).* Figure 21 instead shows the condition of the key 5 and of the support element 31 *(and consequently of the blocking element 32, not shown)* of the support assembly 30 after alignment of the key 5 with the reference direction 101, i.e., at the end of the correction controlled by the ECU and performed by means of the drive unit 50.

With reference to figure 21, it can be observed that the reference direction 101 is substantially parallel to the planes on which the side walls 13A, 13B that laterally delimit the chamber 10 extend. In the condition shown in figure 20, the transmission bar 514 of the mechanism 52 is substantially parallel to the reference direction 101 and therefore the two elements 31, 32 of the support assembly 30 have a given orientation with respect to the reference direction 101. The bushing 513 is also aligned with the reference direction 101. In this condition, the disc 512 *(to which the bushing 513 is shrink fitted)* occupies a predetermined angular position, hereinafter also indicated as home position. By comparing figures 20 and 21, it can be observed how the condition of alignment is reached following a controlled rotation of the disc 512 that causes a corresponding eccentric movement of the bushing 513 with respect to the axis of rotation of the motor 51. This movement causes a relative sliding of the transmission bar 514 with respect to the bushing 513 and a simultaneous rotation of the support element 31 *(and hence of the blocking element 32)* to which the end of the transmission bar 514 is rigidly connected. In particular, rotation of the support element 31 takes place in the same direction as rotation of the disc 512.

With reference to figure 16, the drive unit 50 is preferably provided with sensor means 55 configured to generate a signal indicative of the fact that the disc 51 is or is not in the home position. The sensor means 55 are electrically connected to the ECU. In accordance with a preferred operating mode, before starting a new process for reading/identifying the profile of a key, the ECU sends a control signal to the motor 51 to return the disc 512 to the home position. This control signal is generated whenever the sensor means 55 detect that the disc 512 is not in this position.

Figure 22 shows a device according to the invention in accordance with the configuration schematized in figure 4. In fact, the device of figure 22 differs from that of figures 5 to 21 substantially due to the different structure of the optical assembly provided with two distinct optical units 41A, 41B, one for acquiring the image IC of the blade 5B on the reference plane 100, the other specifically for acquiring the profile image IP. The optical assembly of the device of figure 22 thus comprises two optical sensors 44A, 44B both electrically connected to the ECU *(not shown in the figure)* and hence two objective lenses 43A, 43B that define two optical axes 400A, 400B orthogonal to each other. For the remaining part, the device of figure 22 has the same configuration and operates in the same way as the one of figures 5 to 21. In particular, the ECU is configured so as to perform the correction of any misalignment of the key according to the same principles and for the same purposes described above.

The present invention also relates to an apparatus 600 for duplicating a key comprising a device 1 according to the invention. In a possible embodiment thereof, the apparatus 600 has the configuration of an *"automated kiosk"* for duplicating a key. In particular, the term *"automated kiosk"* is meant as an apparatus provided with a magazine 601 including a plurality of storage compartments 602 each for containing a specific model of key blank to be duplicated and a duplication unit 603 configured to operate on a key blank whose profile corresponds to that of a key examined by means of the device 1 according to the invention.

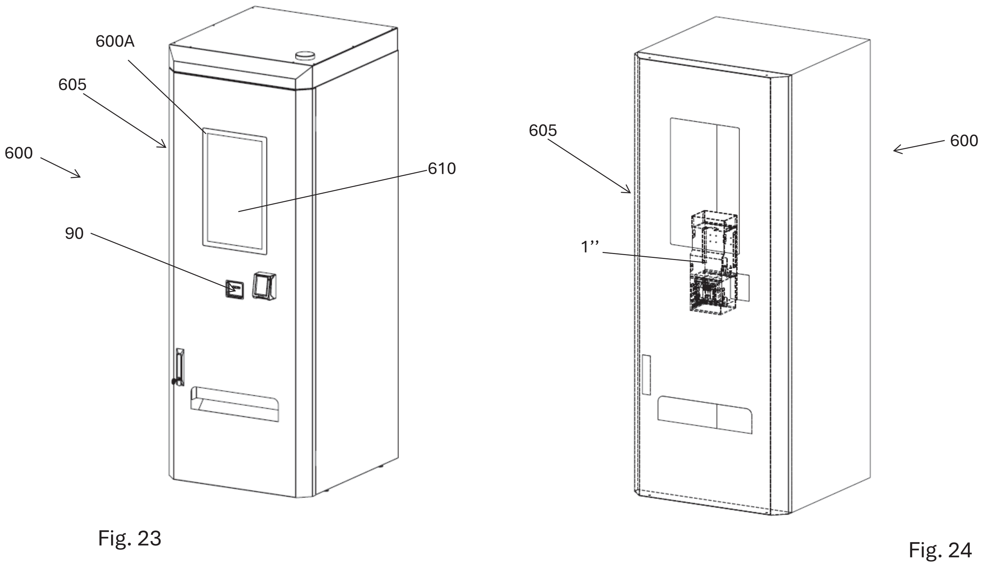

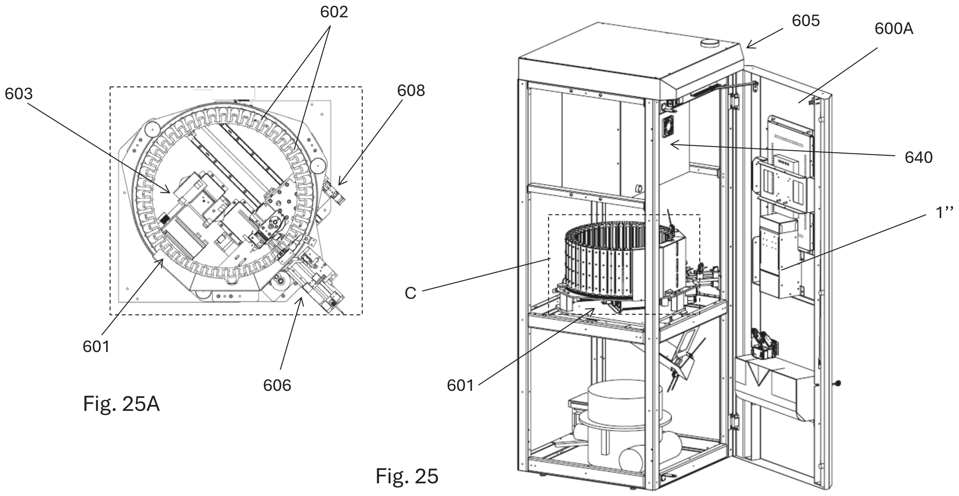

Figures 23 and 24 are perspective views relating to a possible embodiment of an automated kiosk 600, while figure 25 shows a possible internal structure thereof. With reference to figure 23, the automated kiosk 600 has an outer container 605 in which a front wall 600A provided with at least one user interface *(for example a display 610)* is defined. The device 1" described above with reference to figures 5 to 22 is installed on this kiosk 600. In particular, the device 1" is installed so that the plate 90 of the support assembly 30 defines a portion of the front wall 600A of the kiosk 600. This installation mode is perceivable from figure 24, in which the device 1" according to the invention is illustrated with dashed lines.

In figure 25 the kiosk 600 is shown without some portions of the outer container 605. The magazine 601 is preferably automated comprising drive means 608 for moving the compartments 602 along at least one predetermined trajectory *(circular in the figures).* In particular, the purpose of these drive means 608 is to move a storage compartment to a predetermined position for picking up the key contained in said compartment. The apparatus 600 further comprises a pick up and transport unit 606 of the key blank configured to extract the required key blank from the related storage compartment and to transport this key to the duplication unit 603.

The apparatus 600 comprises an electronic control unit 640 that controls at least the pick up and transport unit 606 and the duplication unit 603 and, when present, the drive means 608. The electronic control unit 640 is electrically connected to the ECU of the device 1" according to the invention. Preferably, the ECU of the device 1" is a module integrated in the electronic control unit 640. In any case, in the case of an automated kiosk 600, the ECU of the device 1" is also configured to identify the bitting and hence to obtain the dimensions and the shape of the profile of the blade 5B of the key. These data are processed by the electronic control unit 640 of the kiosk to operate the duplication unit 603 accordingly.

From the viewpoint of operation, the automated kiosk 600 operates according to the following principle. Through the device 1" according to the invention the profile of the blade 5B and the bitting of a key 5 to be duplicated are identified. In particular, the device determines the identification code of the key blank corresponding to the profile of the key to be duplicated. The electronic control unit 640 of the kiosk identifies the compartment 602 of the automated magazine 600 containing the key blank with the given identification code and activates the drive means 608 to take this compartment 602 to the required pick up point for operation of the pick up and transport unit 606. The electronic control unit 640 then activates the pick up and transport unit 606, which picks up the key from the compartment and takes it to the duplication unit 603. Subsequently, the electronic control unit 640 activates the duplication unit 603 so as to obtain the bitting on the blade of the key blank, where this bitting has shape and dimensions corresponding to those identified by means of the device 1" according to the invention.

The present invention also relates to an automatic magazine comprising a device 1 for identifying the profile of a key according to the invention. For the purposes of the present invention, the term automatic magazine is meant as an apparatus including a plurality of storage compartments each for containing a specific model of key blank to be duplicated and the ultimate purpose of which is to release a key blank to be duplicated. Therefore, unlike a duplication kiosk, the automatic magazine does not have the function of duplicating the key and hence does not have a duplication unit. Consequently, in this case, the ECU of the device 1 could be configured so as to determine, based on the profile of the key identified, the code of the key blank without identifying/detecting the bitting of the blade.

The present invention also relates to a duplicating machine comprising a device 1 for identifying the profile of a key according to the invention.

The present invention therefore achieves all the intended aims and objects. In particular, the device according to the invention allows the blade of the key to be aligned according to a predetermined optimal direction for identifying the profile. This result is obtained without the use of guide elements for insertion of the key into the analysis chamber and thus guaranteeing optimal conditions of illumination of said key. The device according to the invention is operatively versatile and very compact, making it easy to install on duplication apparatus. Naturally, those skilled in the art may make modifications and variations to the device for identifying the profile of a blade of a key described in detail above in order to satisfy specific and contingent application requirements, said modifications and variations all falling within the scope of protection defined by the claims.

## Claims

1. A device (1, 1', 1") for reading the profile of a blade (5B) of a key (5), wherein said the device (1) comprises:
- an analysis chamber (10) for positioning said blade (5), wherein said chamber (10) is provided with an inlet section (9) for the insertion of said blade (5B);
- a support assembly (30) of said key (5) including at least one support element (31) that supports a flat surface (300) for supporting at least one portion of said key (5), wherein said surface (300) defines a reference plane (100), said support element (31) being configured to support said key (5) at said inlet section (9) so that at least one portion of said blade (5B) of said key (5) remains suspended in a cantilevered manner in said chamber (10);
- a lighting assembly (20) operatively associated with said chamber (10) and configured to illuminate said blade (5B);
- an optical assembly (40) configured to provide at least one image (IP) of said profile of said blade (5) and at least one image (IC) of said blade (5B) on said reference plane (100), wherein said optical assembly (40) comprises at least one first optical unit (41, 41A) including an objective lens (43, 43A) and an optical sensor (44, 44A), wherein said objective lens (43, 43) defines an optical axis (400, 400A) substantially orthogonal to said reference plane (100);
- an electronic control unit (ECU) operatively connected at least to said optical sensor and configured to acquire said image (IC) of said blade (5B) through said optical sensor (44, 44A),
**characterized in that** said support element (31) is rotatable about an axis of rotation (501) orthogonal to said reference plane (100), said lighting assembly (20) maintaining a fixed position during rotation of said support element (31), wherein said the device (1) comprises a drive unit (50) for rotating said support element (31) about said axis of rotation (501), wherein said drive unit (50) is controlled by said electronic control unit (ECU), and wherein said electronic control unit (ECU) is configured to:
- acquire an image of said blade (5B) through said optical assembly (40);
- determine misalignment of said blade (5B) with respect to a predetermined reference direction (101) to acquire said image (IP) of said profile;
- control said drive unit (50) so as to correct said misalignment;
- acquire, following correction of the misalignment, said image of said profile through said optical assembly (40).

2. The device (1, 1', 1") according to claim 1, wherein said electronic control unit (ECU) is configured to:
- identify characteristic elements of said blade (5B) of said key (5),
- determine a longitudinal direction (102) along which said blade (5B) extends based on the mutual position of said characteristic elements;
- calculate the value of a characteristic parameter of said misalignment of said longitudinal direction (102) with respect to said reference direction (101).

3. The device (1, 1',1") according to claim 1 or 2, wherein said optical sensor (44, 44A) is a video camera and wherein said electronic control unit (ECU) is configured to acquire in sequence photograms of said blade (5B) on said reference plane (100) during insertion of said blade (5B) into said inlet section (9).

4. The device (1, 1") according to any one of claims 1 to 3, wherein said optical assembly (40) comprises at least one reflecting element (80) arranged so as to divert the image of said profile (IC) of the key (5) toward said objective lens (43, 43A) of said first optical unit (41, 41A), and wherein said electronic control unit (ECU) acquires said image (IP) of said profile through said optical sensor (44, 44A) of said first optical unit (41, 41A).

5. The device (1, 1") according to claim 4, wherein said reflecting element (80) is a right-angled optical prism arranged in a position substantially opposite said inlet section (9) of said analysis chamber (10).

6. The device (1') according to any one of claims 1 to 5, wherein said optical assembly (40) comprises a second optical unit (41B) including an objective lens (43B) defining another optical axis (400B) orthogonal with respect to said optical axis (400A) of said first optical unit (41), wherein said second optical unit (41B) comprises an optical sensor (44B) electrically connected to said electronic control unit (ECU), wherein said electronic control unit (ECU) acquires said image (IP) of said profile through said optical sensor (44A) of said second optical unit (41B).

7. The device (1', 1") according to any one of the preceding claims, wherein said lighting assembly (20) comprises a first light source (21A) and a second light source (21B) arranged in an opposite position so as to illuminate a corresponding side (5₁, 5₂) of said blade (5B) when it is inserted into said chamber (10) and supported on said flat surface (300).

8. The device (1', 1") according to claim 7, wherein said chamber (10) is delimited by two mutually opposite side walls (13A, 13B) made of translucent material extending on planes orthogonal to said reference plane (100), wherein each of said light sources (21A, 21B) comprises at least one LED strip (24A, 24B) operatively associated with one of said side walls (13A, 13B) and positioned outside the space comprised between said side walls (13A, 13B).

9. The device (1',1") according to any one of the preceding claims, wherein said lighting assembly (20) is configured to generate infrared light.

10. The device (1, 1', 1") according to any one of claims 1 to 9, wherein said support assembly (30) comprises a blocking element (32) configured to exert a blocking force on said key (5) so as to hold it on said flat surface (300), wherein said blocking element (32) rotates about said axis of rotation (501) following rotation of said support element (31).

11. The device (1', 1") according to claim 10, wherein said support element (31) comprises a pin portion (310) and a head portion (311) extending from said pin portion (310) and wherein said blocking element (32) comprises a pin portion (320) and a head portion (321) extending from said pin portion (320), wherein said support assembly (30) comprises a plate (90) including a first portion (90A) and a second portion (90B) connected to each other and configured so as to define a seat (99) at which said head portions (311, 321) of said support element (31) and of said blocking element (32) are positioned, wherein said pin portion (310) of said support element (30) is pivotally connected in a seat (95A) defined by said first portion (90A) of said plate (90) and wherein said pin portion (320) of said blocking element (32) is pivotally connected in a seat (95B) defined by said second portion (90B) of said plate (90), wherein said head portion (311) of said support element (31) defines said flat surface (300) and wherein said head portion (321) of said blocking element (32) defines a gripping surface (305) facing said flat surface (300), said head portions (311, 321) of said elements (31, 32) being configured and mutually arranged so that the head portion (31) of the support element (31) drives the head portion (321) of the blocking element (32) in rotation.

12. The device (1', 1") according to claim 11, wherein a spring element (35) that thrusts said blocking element (32) toward said support element (31) is inserted into said seat (95B) of said second portion (90B) of said plate (90).

13. The device (1, 1', 1") according to any one of the preceding claims, wherein said first optical unit (41) is arranged in a position above said chamber (10) and wherein said drive unit (50) is arranged in a position below said chamber (10).

14. The device (1', 1") according to any one of the preceding claims, wherein said drive unit (50) comprises an electric motor (51) and a transmission mechanism (52) to transmit motion from the shaft of said electric motor (51) to said support element (31) of said support assembly (30), wherein said mechanism (52) comprises:
- a disc (512) driven by the shaft of said electric motor (51);
- a bushing (513) integral with said disc (512) and arranged in an eccentric position with respect to an axis of rotation of said disc (512);
- a transmission bar (514) slidingly coupled to said bushing (513) and rigidly connected to said support element (31),
wherein following rotation of said disc (512) said transmission bar (514) is rotated by said bushing (513) and wherein rotation of said transmission bar (514) determines a corresponding rotation of said pin element (31).

15. An apparatus (600) for duplicating keys **characterized by** comprising a device (1, 1', 1") according to any one of claims 1 to 14.

16. An automatic magazine for storing a key blank, **characterized by** comprising a device (1, 1', 1") according to any one of claims 1 to 14.
